(19) Europäisches Patentamt
European Patent Office
Office européen des brevets

(11) **EP 3 167 455 B1**

(12) **EUROPÄISCHE PATENTSCHRIFT**

(45) Veröffentlichungstag und Bekanntmachung des Hinweises auf die Patenterteilung:
**26.02.2020 Patentblatt 2020/09**

(21) Anmeldenummer: **15732695.0**

(22) Anmeldetag: **30.06.2015**

(51) Int Cl.:
*G21F 9/02* (2006.01)     *B01J 20/18* (2006.01)
*B01D 53/02* (2006.01)    *B01J 20/28* (2006.01)
*B01J 20/30* (2006.01)

(86) Internationale Anmeldenummer:
**PCT/EP2015/064803**

(87) Internationale Veröffentlichungsnummer:
**WO 2016/005227 (14.01.2016 Gazette 2016/02)**

(54) **ADSORPTIONSMATERIAL ZUR ADSORPTION VON EDELGASEN, VERWENDUNG DESSELBEN UND VERFAHREN ZUR ADSORPTION VON EDELGASEN**

ADSORPTION MATERIAL FOR ADSORPTION OF NOBLE GASES, ITS USE AND PROCESS FOR ADSORPTION OF NOBLE GASES

MATÉRIAUX D'ADSORPTION POUR L'ADSORPTION DES GAS NOBLES, SON USAGE ET PROCÉDÉ POUR L'ADSORPTION DES GAS NOBLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.07.2014 DE 102014010020**

(43) Veröffentlichungstag der Anmeldung:
**17.05.2017 Patentblatt 2017/20**

(73) Patentinhaber: **Clariant International Ltd**
**4132 Muttenz (CH)**

(72) Erfinder:
• **TISSLER, Arno**
  **93105 Tegernheim (DE)**
• **BUETTNER, Olaf**
  **83059 Rosenheim (DE)**
• **ENDLER, Mika**
  **83022 Rosenheim (DE)**
• **HARTSBERGER, Helmut**
  **81825 München (DE)**
• **STEPANIK, Kerstin**
  **83043 Bad Aibling (DE)**
• **SAUERBECK, Silke**
  **83052 Bruckmühl (DE)**

(74) Vertreter: **Kuba, Stefan et al**
**Clariant Produkte (Deutschland) GmbH**
**IPM / Patent & License Management**
**Arabellastraße 4a**
**81925 München (DE)**

(56) Entgegenhaltungen:
**WO-A1-81/00413     US-A- 4 369 048**
**US-A- 4 447 353**

**Beschreibung**

Die vorliegende Erfindung betrifft ein Adsorptionsmaterial zur Adsorption von Edelgasen, die Verwendung desselben und ein Verfahren zur Adsorption von Edelgasen, darunter insbesondere Krypton und Xenon.

In Kernspaltungsreaktoren treten im Normalbetrieb, aber insbesondere im Störfall, neben den festen Zerfallsisotopen des Urans bzw. den aus der Spaltung des Urans hervorgegangenen Tochter-Isotopen und den durch Neutroneneinfang entstandenen höheren Isotopen, auch gasförmige bzw. flüchtige, radioaktive Verbindungen auf, deren Freisetzung in die Umwelt unbedingt vermieden werden muss. Die wichtigsten hierbei sind neben Wasserstoff, radioaktives Jod, Methyljodid und radioaktive Isotope der Edelgase Krypton und Xenon, darunter insbesondere $^{85}$Kr und $^{135}$Xe. Die beiden letztgenannten radioaktiven Isotope weisen eine kurze Halbwertzeit auf, so dass von ihnen eine erhebliche Gefährdung ausgeht. Während des Betriebs und insbesondere im Falle eines Störfalls reichern sich diese flüchtigen radioaktiven Substanzen innerhalb der Reaktorhülle an und müssen von dort entfernt werden. Werden diese radioaktiven Edelgase bei einem Störfall freigesetzt verbreiten sie sich extrem schnell über die Atmosphäre, da sie im Gegensatz zu den meisten anderen Spaltprodukten nicht partikelgebunden sind. Dies betrifft im Wesentlichen die Krypton-Isotope mit Halbwertszeiten zwischen einigen Stunden und über 10 Jahren und das Xenon Isotop $^{133}$Xe mit einer Halbwertszeit von ca. 5 Tagen. Die weltweite Konzentrationserhöhung an diesen Isotopen war bei den letzten großen kerntechnischen Unfällen von Tschernobyl und Fukushima deutlich zu beobachten. Ein besonderes Problem stellt darüber hinaus das über die Fission des Urans und über Betazerfall von $^{135}$Te und $^{135}$I entstehende Isotop $^{135}$Xe (Halbwertszeit ca. 9 Stunden) dar. $^{135}$Xe besitzt einen großen Einfangquerschnitt für thermische Neutronen und wandelt sich durch Neutro-neneinfang in $^{136}$Xe um. Diese Reaktion reduziert damit die für die Kernspaltung notwendige Konzentration/Häufigkeit an Spaltneutronen, was zur Reduktion der Leistung des Kernkraftwerkes führt. Dieses als "Xenonvergiftung" bekannte Phänomen kann darüber hinaus zu Problemen bei dem Wiederanfahren eines abgeschalteten Reaktors führen.

Die Entfernung von Edelgasisotopen ist daher sowohl zur Vermeidung der globalen Exposition als auch für den sichereren Betrieb der Kernkraftwerke notwendig. Für die Adsorption von radioaktiven Edelgasen wird laut Stand der Technik spezielle Aktivkohle eingesetzt, wie sie auch zur Lösungsmittelrückgewinnung verwendet wird. Bei einer solchen Aktivkohle wird die Anzahl der Mikroporen maximiert und die Anzahl der Makroporen minimiert. Nachteil der Verwendung von Aktivkohle ist die geringe Aufnahmefähigkeit für Edelgase und ganz besonders die sehr tiefen Desorptionstemperaturen. Bei Temperaturen unterhalb von 100 °C, wie sie z. B im Störfall erreicht werden können, werden diese Gase wieder freigesetzt. Als Alternative wurde die Verwendung von Adsorptionsmaterialien auf der Basis von Zeolithmaterialien vorgeschlagen.

Daniel et al. (J. Phys. Chem. 2013, Vol. 117, Nr. 29, S. 15122 - 15129, "Xenon Capture on Silver-Loaded Zeolites: Characterization of Very Strong Adsorption Sides") beschreibt die Anzahl und die Stärke von Adsorptionsstellen für Xenon in Silber modifizierten Zeolithen durch isotherme Messungen bei verschiedenen Temperaturen über einen breiten Druckbereich. Hierzu wurden vollständig und teilweise ausgetauschte mit Silber beladene Zeolithen hergestellt, ausgehend von Na-ZSM-5(25), Na-ZSM-5(40), Na-Beta-NaX und NaY. Es wurde entdeckt, dass mit Silber modifizierte Zeolithe eine oder zwei unterschiedliche Adsorptionsstellen ausweisen, ausgehend von der Natur des Materials und der Silberbeladung. Die höchste Konzentration an starken Adsorptionsstellen wird bei einem vollständig mit Silber ausgetauschten ZSM-5 (5,7x10$^{-4}$mol/g) gefunden, der für die beschriebenen Zeolithe des Pentasiltyps derjenige mit dem höchsten Silbergehalt darstellt.

EP0029875 A1 betrifft ein Verfahren zur Immobilisierung von radioaktiven Edelgasen, insbesondere von radioaktivem Krypton in Zeolithen, bei welchem das Edelgas nach einer Wärmebehandlung der Zeolith-Matrix unter hohem Druck in die Hohlräume des Gefüges der Zeolith-Matrix eingepresst und unter Beibehaltung des Druckes durch Kühlung der Matrix in den Hohlräumen eingeschlossen wird. Aus Wiederaufbereitungsanlagen für bestrahlte Kernbrennstoffe wird ein Anfall großer Mengen radioaktiver Edelgase erwartet, die so verfestigt werden müssen, dass sie auch bei Temperaturen von 473 K und darüber, aus der sie enthaltenen Endlager-Matrix nicht freigesetzt werden. Offenbart wird, dass als Matrix ein erdalkalisubstituierter Zeolith mit der Bezeichnung 5A (=0,5 nm Porendurchmesser) und der allgemeinen Zusammensetzung: $M_6[(AlO_2)_{12}(SiO_2)_{12}]xH_2O$, M = Mg, Ca, Ba oder Sr verwendet wird. Das Einpressen des Edelgases in die Hohlräume des Zeolithen erfolgt bei einer Temperatur im Bereich von 720 K bis 870 K und mit einem Druck von 200 bar bis ca. 2000 bar. Nach entsprechender Abkühlung werden die Edelgas-Atome in den Beta-Hohlräumen des Zeolithen thermisch stabil zurückgehalten.

Auch wurde die Verwendung von Adsorptionsmaterialien auf der Basis von Zeolithen beschrieben, die mit dispergierten Edelmetallen wie Silber beladen sind. Munakata et al. (Journal of Nuclear Science and Technology, 2003, Vol. 40, Nr. 9, S. 695 - 697, "Adsorption of Noble Gases on Silver-Mordenite") beschreiben die Verwendung eines mit Silber beladenen Mordenits zur Adsorption von Xenon oder Krypton. Die Herstellung des Silber-beladenen Mordenits erfolgte durch Ionenaustausch eines natürlichen Mordenits mit AgNO$_3$. Nach dem Waschen und Trocknen wurde ein Silbergehalt von 4% gemessen.

Bei der Anwendung von Adsorptionsmaterialien in Kernspaltungsreaktoren muss gewährleistet werden, dass die Adsorption auch bei gegenüber Raumtemperatur erhöhten Temperaturen erfolgt und es gleichzeitig nicht zur Zerstörung des Adsorptionsmaterials kommt. Die Strukturen einiger Zeolithe sind thermisch stabil und damit für den Einsatz als Adsorptionsmaterialien in Kernspaltungsreaktoren geeignet. Bei der Anwendung in Kernspaltungsreaktoren treten die zu adsorbierenden Edelgase in einem Gasgemisch, z.B. Luft, auf, das insbesondere im Störfall stark mit Feuchtigkeit angereichert sein kann. Schlimmstenfalls könnte sogar erhitzter Dampf des Kühlkreislaufes auf das Adsorptionsmaterial einwirken. Die Strukturen der Zeolithe können jedoch bei hohen Temperaturen und der gleichzeitigen Einwirkung von gasförmigem Wasser beschädigt bzw. zerstört werden, man spricht von mangelnder hydrothermaler Stabilität. Die Zerstörung der Struktur des Zeolithen, z.B. durch Dealuminierung, führt zur Verminderung der inneren Oberfläche des Zeolithen, was mit einem Verlust an Adsorptionsfähigkeit einhergeht. Wenn das Zeolithmaterial mit dispergiertem Metall beladen ist, führt der Zusammenbruch der Zeolithstruktur zum Sintern der Metallcluster, diese verlieren ihre optimale Größe und es bilden sich größere Cluster mit verringerter aktiver Oberfläche.

Es besteht daher der Bedarf nach einem Adsorptionsmaterial, das effektiv die Edelgase Xenon und/oder Krypton einzeln oder gleichzeitig adsorbiert und auch unter dem Einfluss von hoher Feuchtigkeit und erhöhter Temperatur stabil bleibt.

Diese Aufgabe wird gelöst durch ein Adsorptionsmaterial zur Adsorption von Edelgasen, umfassend ein mit Ag beladenes synthetisch hergestelltes Zeolithmaterial des Strukturtyps MOR, dadurch gekennzeichnet, dass das Ag/Al-Verhältnis im Zeolithmaterial größer 1 ist. In einer bevorzugten Ausführungsform besteht das Adsorptionsmaterial zur Adsorption von Edelgasen ausschließlich aus einem mit Ag beladenen synthetisch hergestellten Zeolithmaterial des Strukturtyps MOR und ist dadurch gekennzeichnet, dass das Ag/Al-Verhältnis im Zeolithmaterial größer 1 ist.

Zeolithe stellen gemäß der Definition der International Mineralogical Association (D.S. Coombs et al., Canadian Mineralogist, 1979, 35, S. 1571) eine kristalline Substanz aus der Gruppe der Aluminiumsilikate mit einer Raumnetzstruktur dar, die aus $SiO_4/AlO_4$-Tetraedern bestehen und durch gemeinsame Sauerstoffatome zu einem regelmäßigen dreidimensionalen Netzwerk verknüpft sind. Die Zeolithe werden gemäß ihrer Topologie in verschiedene Strukturtypen eingeteilt. Die Zeolithe unterscheidet man hauptsächlich nach der Geometrie der Hohlräume und Kanäle, die durch das starre Netzwerk der $SiO_4/AlO_4$-Tetraeder gebildet werden, das für jeden Strukturtyp charakteristisch ist. Bestimmte Zeolithe zeigen einen gleichförmigen Strukturaufbau, z. B. die ZSM-5- oder die MFI-Topologie, mit linearen oder zickzackförmig verlaufenden Kanälen, bei anderen schließen sich hinter den Porenöffnungen größere Hohlräume an, z. B. bei den Y- oder A-Zeolithen, mit den Topologien FAU und LTA.

Die charakteristischen Hohlräume und Kanäle von Zeolithen können im Allgemeinen mit Wassermolekülen und zusätzlichen Gerüstkationen besetzt sein, die ausgetauscht werden können. Wenn eine Edelmetallbeladung gewünscht ist, können Metalle, wie Edelmetalle, atomar in der Form von Clustern dispergiert in die Hohlräume und Kanäle des Zeolithmaterials integriert werden oder auf der äußeren Oberfläche des Zeolithmaterials aufgebracht werden.

Das Zeolithmaterial, das im Rahmen der vorliegenden Erfindung verwendet wird, besteht aus einem Zeolith, der den Strukturtyp MOR aufweist, z.B. Mordenit. Der Strukturtyp MOR zeichnet sich durch zwei eindimensionale Porensysteme aus, bestehend aus einem 8-Ring-Porensystem mit einem Durchmesser von 2,6 x 5,7 Ängström und einem 12-Ring-Porensystem mit einem Durchmesser von 6,5 x 7 Ängström.

Einige Zeolithe des Strukturtyps MOR, wie Mordenit oder Maricopait, kommen natürlich vor, jedoch ist das erfindungsgemäße Zeolithmaterial, dass den Strukturtyp MOR aufweist, ein synthetisch hergestelltes Zeolithmaterial. Üblicherweise erfolgt die synthetische Darstellung von Zeolithen, wie von synthetischem Mordenit, durch die Hydrothermalsynthese. Zur synthetischen Darstellung von Mordenit wird eine Aluminiumquelle (z.B. Natriumaluminat) und eine Siliziumquelle (z.B. Silica-Pulver) unter hydrothermalen Bedingungen bei Temperaturen zwischen 150 und 200 °C in einem geschlossenen Reaktor umgesetzt. Anschl ießend wird der erhaltene Festkörper von der wässrigen Phase abgetrennt und bei erhöhter Temperatur z.B. an Luft getrocknet. Die Synthese von Mordenit wird z.B. in Verified Syntheses of Zeolitic Materials, 2nd Revised Edition, Harry Robson (editor), Karl Petter Lillerud (XRD Patterns), Published on behalf of the the Synthesis Commission of the International Zeolite Association 2001, beschrieben.

Im Unterschied zu natürlichem Mordenit zeigt der synthetisch hergestellte Mordenit ein höheres Si/Al-Verhältnis und eine höhere Reinheit, d.h. dass nur die bei der Synthese eingesetzten Kationen zu finden sind, während bei natürlichem Mordenit eine größere Anzahl unterschiedlicher Kationen zu finden ist und deren Zusammensetzung in Abhängigkeit vom Fundort stark schwankt.

Es ist vorteilhaft, das durch die Hydrothermalsynthese gewonnene getrocknete Zeolithmaterial zu kalzinieren. Der Kalzinierschritt erfolgt vorzugsweise bei Temperaturen von 300 bis 600 °C, stärker bevorzugt von 400 bis 550 °C. Die Kalzinier dauer beträgt vorzugsweise 1 bis 8 h, stärker bevorzugt 2 bis 6 h und insbesondere etwa 3 bis 5 h.

Das in dem Adsorptionsmaterial enthaltene erfindungsgemäße synthetische Zeolithmaterial, das den Strukturtyp MOR aufweist, ist mit dem Edelmetall Silber (Ag) in Form eines Silbersalzes beladen und fungiert als Trägermaterial. Das erfindungsgemäße Adsorptionsmaterial kann als Pulver, als Vollkörper oder als Beschichtung, d.h. aufgebracht auf einen Formkörper vorliegen, bevorzugt ist jedoch ein Vollkörper. Das erfindungsgemäße Adsorptionsmaterial kann allein aus dem mit Silber beladenen Zeolithmaterial bestehen, es kann aber auch vor dem Einsatz mit Hilfsstoffen wie Bindern vermengt werden.

Ein Vollkörper des Adsorptionsmaterials kann durch Formung des mit Silber beladenen pulverförmigen Zeolithmaterials oder aber durch die Formung des Zeolithmaterials und die anschließende Beladung des in dem Formkörper enthaltenen Zeolithmaterials mit Silber erhalten werden. Die Formung kann beispielsweise durch Extrudieren oder Pressen erfolgen. Bevorzugte Formkörper sind beispielsweise Kugeln, Ringe, Zylinder, Lochzylinder, Triloben oder ein Monolith, wie beispielsweise ein monolithischer Wabenkörper, der durch Extrusion gewonnen wird. Weiterhin können bei der Formung Hilfsstoffe wie Binder oder Porositätsbildner zugesetzt werden, die z.B. die mechanische Stabilität der Formkörper erhöhen oder die Porosität erhöhen. Besonders bevorzugt sind Extrudate oder Tabletten. Dazu wird das Zeolithpulver mit den Hilfsstoffen zu einer teigähnlichen Masse verknetet und dann mittels eines Extruders verformt, bzw. mittels einer Tablettenpresse zu Tabletten verpresst.

Die Einbringung des Silbers in das Zeolithmaterial kann z.B. durch Imprägnierung mit einer wässrigen Lösung erfolgen, die das Silber in Form einer Vorläuferverbindung enthält. Die Imprägnierung kann mit allen dem Fachmann bekannten Methoden durchgeführt werden. Liegt das Zeolithmaterial als Pulver vor, so erfolgt die Imprägnierung des Zeolithmaterials bevorzugt gemäß der dem Fachmann bekannten "incipient wetness"-Methode. Hierbei wird zu dem pulverförmigen Zeolithmaterial unter Rühren eine flüssige, vorzugsweise wässrige, Silber enthaltende Lösung zugegeben, wobei nur gerade soviel silberhaltige Lösung zugegeben wird, dass sich gerade keine überstehende Lösung bildet. Durch dieses Verfahren wird sichergestellt, dass die Poren des Zeolithmaterials vollständig mit der silberhaltigen wässrigen Lösung benetzt sind. Vorzugsweise handelt es sich bei der wässrigen silberhaltigen Lösung um eine wässrige Silbernitratlösung mit einer Molarität von 0,25 bis 5 mol/l.

Alternativ kann die Herstellung des Vollkörpers aber auch durch die Imprägnation des Formkörpers mit einer edelmetallhaltigen Lösung erfolgen. Hierzu erfolgt die Formung wie oben beschrieben, jedoch ohne, dass das pulverförmige Zeolithmaterial mit Silber beladen wäre. Im Folgenden werden die Formkörper in eine vorzugsweise wässrige silberhaltige Lösung eingebracht. Bei dem Imprägnationsschritt kann z.B. die Imprägnierung durch die "incipient wetness"-Methode erfolgen. Hierbei werden die Formkörper mit einer flüssigen, vorzugsweise wässrigen, Silber enthaltenden Lösung begossen, wobei nur gerade soviel silberhaltige Lösung zugegeben wird, dass sich gerade keine überstehende Lösung bildet. Durch dieses Verfahren wird sichergestellt, dass die Poren des Zeolithmaterials vollständig mit der silberhaltigen wässrigen Lösung benetzt sind. Vorzugsweise handelt es sich bei der wässrigen silberhaltigen Lösung um eine wässrige Silbernitratlösung mit einer Molarität von 0,25 bis 5 mol/l.

Optional erfolgt nach der Imprägnierung ein Trocknungsschritt. Der Trocknungsschritt des imprägnierten pulverförmigen Zeolithmaterials bzw. des imprägnierten Formkörpers oder Vollkörpers erfolgt bevorzugt unterhalb des Zersetzungspunktes der Edelmetall-Vorläuferverbindung. Der Trocknungsschritt findet bevorzugterweise an Luft statt. Die Trocknungstemperaturen liegen meist im Bereich zwischen 50 bis 250 °C, bevorzugt zwischen 50 bis 150 "C, besonders bevorzugt 80 bis 120 °C, Die Trocknungsdauer beträgt vorzugsweise mehr als 2 h besonders bevorzugt ca. 16 h.

Sofern ein beschichtetes Adsorptionsmaterial erhalten werden soll, kann dieses durch das Beschichten eines Formkörpers mit einem silberhaltigen Zeolithmaterial hergestellt werden. Alternativ hierzu kann ein Formkörper mit dem Zeolithmaterial beschichtet werden und anschließend mit einer silberhaltigen Lösung imprägniert werden. Hierzu wird der beschichtete Formkörper in eine silbernitrathaltige Lösung (0,25 bis 5 mol/l) getaucht und anschließend getrocknet.

Das von dem Adsorptionsmaterial umfasste edelmetallhaltige Zeolithmaterial muss mindestens Silber enthalten, kann jedoch auch zusätzliche Edelmetalle enthalten. Bei den zusätzlichen Edelmetallen handelt es sich bevorzugterweise um Edelmetalle, ausgewählt aus der Gruppe bestehend aus Pt, Pd, Rh, Ru, Cu und Au. Wird eine bimetallische Edelmetallkombination aus Ag und einem weiteren Edelmetall realisiert, so liegen die Edelmetalle M typischerweise in einem Atomverhältnis von Ag/M 1:10 bis 10:1 und besonders bevorzugt 2:1 bis 4:1 vor. Das Edelmetall, das in dem Adsorptionsmaterial Verwendung findet, liegt bevorzugterweise in den Poren des Zeolithmaterials vor. Es kann daher eine Synthesemethode gewählt werden, die dazu führt, dass das/die Edelmetall(e) ganz oder überwiegend in den Mikroporen des Zeolithen vorliegen und nicht oder nur in geringem Maße an der äußeren Oberfläche des Zeolithen.

Die Gesamtbeladung an Silber, bezogen auf das Gesamtgewicht des edelmetallhaltigen Zeolithmaterials, liegt im Bereich zwischen 5 bis 50 Gew.-%, bevorzugterweise im Bereich von 20 bis 40 Gew.-%.

Das $SiO_2/Al_2O_3$-Verhältnis im Zeolithmaterial ist vorzugsweise größer 30, besonders bevorzugt größer 50 und stärker bevorzugt größer 70 und insbesondere bevorzugt größer 80.

Das molare Verhältnis zwischen der Menge an Silberatomen und Aluminiumatomen (Ag/Al-Verhältnis) im Zeolithmaterial ist größer 1, bevorzugt größer 2, stärker bevorzugt größer 4,5. Das Ag/Al-Verhältnis im Zeolithmaterial kann im Bereich zwischen 1 bis 30 liegen, bevorzugterweise im Bereich zwischen 2 bis 20, ganz besonders bevorzugt im Bereich zwischen 4 und 15.

Die BET-Oberfläche des silberhaltigen Zeolithmaterials liegt vorzugsweise im Bereich von 10 bis 1000 $m^2/g$, mehr bevorzugt 50 bis 800 $m^2/g$ und am meisten bevorzugt 300 bis 700 $m^2/g$.

Messmethoden

Elementanalytik mit ICP:

Die ICP-AES (Inductively coupled plasma atomic emission spectroscopy) zur Ermittlung der Elementzusammensetzung bzw. des $n(SiO_2)/n(Al_2O_3)$-Verhältnisses, (kurz $SiO_2Al_2O_3$-Verhältnis), wurde mit dem Gerät ICP Spectro Modula/Arcos durchgeführt. Als Chemikalien wurden dabei eingesetzt: Schwefelsäure 98% p.A., Flusssäure 37% p.A, Salzsäure 37% p.A. Die Probe war fein gemahlen.

Zur Bestimmung der Elemente Si und Al wurden 100 mg Probe in einen 100 ml Plastikbecher eingewogen und mit 1 ml Schwefelsäure und mit 4 ml Flusssäure versetzt. Im Wasserbad wurde 5 Min. lang bei 85 °C aufgeschlossen, bis eine klar e Lösung entstand. Nun wurde temperiert, aufgefüllt und geschüttelt. Alle Elemente wurden am ICP gemessen, ebenso entsprechende Standards. Si wurde mit folgender Einstellung gemessen: Wellenlänge: 288,158 nm. Al wurde mit folgender Einstellung gemessen: Wellenlänge: 396,152 nm.

Ag-Analytik mit Titration:

Es wird ca. 300 mg fein gemörserte Probe in einen Quarztiegel eingewogen und mit 5 g Kaliumdisulfat gemischt. Die Mischung wird unter heller Rotglut aufgeschmolzen und anschließend in ca. 150 ml dest. Wasser unter Erwärmen gelöst. Der Quarztiegel wird aus der Lösung entfernt und die Aufschlusslösung mit Natriumchloridlösung 0,1 mol/l am Titrator (Meth. 2004) titriert.

Alle Standards waren angepasst mit HF und HCl bzw. $H_2SO_4$. Die Auswertung folgte folgender Berechnung:

$$w(E^* \text{ in Prozent}) = \text{ß}(E^*\text{-Messwert in mg/l}) \times V(\text{Messkolben in l}) \times 100 \, / \, m(\text{Einwaage in mg}) \, (E^* = \text{jeweiliges Element}).$$

BET-Oberfläche:

Die Bestimmung der spezifischen Oberfläche der Materialien erfolgt nach der BET-Methode gemäss DIN 66131; eine Veröffentlichung der BET-Methode findet sich auch in J. Am. Chem. Soc. 60,309 (1938). Die zu bestimmende Probe wurde in einem Glasröhrchen bei 350 °C über Nacht unter Vakuum (<0,1mbar) getrocknet. Die Stickstoff-Adsorption wurde bei 77 K mit einem Gemini Gerät von Fa. Micromeritics durchgeführt.

Die Desorptionsmessungen (temperaturprogrammierte Desorption = TPD) erfolgten mit einem Autochem II Gerät von Fa. Micromeritics mit gekoppeltem Massenspektrometer von Fa. Pfeiffer. Probe und Referenzprobe (= Aktivkohle) wurden jeweils in separat durchgeführten Versuchen gemessen; es wurden jeweils ca. 500 mg Probe bzw. Referenzprobe eingewogen und für 15 min bei ca. 35 °C mit reinem Stickstoff gespült. An schließend wurde mit dem Prüfgas (1000 ppm Kr und 1000 ppm Xe in Stickstoff) bei ca. 35 bis 40 °C für 120 min gespült, gefolgt von einer weiteren Spülung mit reinem Stickstoff bei 35 bis 40 °C für 150 min für die Proben bzw. für 240 min für die Referenzprobe. Im Folgenden wurde unter Spülung mit reinem Stickstoff Probe bzw. Referenzprobe mit einer Rate von 5°C/min bis 500°C au fgeheizt. Die dabei erfolgende Desorption des Kryptons und Xenons wurde massenspektroskopisch verfolgt (amu 84 für Krypton und amu 131 für Xenon). Es konnte auf diese Weise ein Temperaturbereich ermittelt werden, in dem die Desorption von Krypton und unabhängig davon die von Xenon ermittelt werden konnte. Der Temperaturbereich $T_{Des}$ der jeweils maximalen Desorption, in Form eines breiten Maximums, wird ermittelt.

Die Menge $A_A$ stellt das Verhältnis zwischen der spezifischen Adsorptionskapazität (Masse Adsorbat / Masse Adsorbens) der Probe und der spezifischen Adsorptionskapazität der Aktivkohle dar (Referenzmaterial Aktivkohle: $A_A$ = 1).

Beispiel 1

Aktivkohle vom Typ EcoSorb CH wurde als Referenzmaterial verwendet.

Beispiel 2

Ein Zeolithmaterial mit der Struktur BEA und einem $SiO_2/Al_2O_3$-Verhältnis von 150 wurde mit dem Binder Silicasol extrudiert und anschließend kalziniert.

Beispiel 3

Ein Zeolithmaterial mit der Struktur MFI und einem $SiO_2/Al_2O_3$-Verhältnis von 27 wurde mit dem Aluminiumhydroxid-Binder Pural ® SB zu einer Masse verknetet, extrudiert und kalziniert. Die Imprägnierung erfolgte mittels der "incipient wetness"-Methode, wozu bezogen auf 200 g Produktmenge 150 g einer 1,4 molaren $AgNO_3$-Lösung verwendet wurde. Die Trocknung erfolgte bei 120 °C.

Beispiel 4

Ein Zeolithmaterial mit der Struktur MFI und einem $SiO_2/Al_2O_3$-Verhältnis von 1200 wurde mit Pural ® SB zu einer Masse verknetet, extrudiert und kalziniert. Die Imprägnierung erfolgte mittels der "incipient wetness"-Methode, wozu bezogen auf 200 g Produktmenge 150 g einer 1,4 moleren $AgNO_3$-Lösung verwendet wurde. Die Trocknung erfolgte bei 120 °C.

Beispiel 5

Ein Zeolithmaterial mit der Struktur ERI und einem $SiO_2/Al_2O_3$-Verhältnis von 3,3 wurde mit Pural ® SB zu einer Masse verknetet, extrudiert und kalziniert. Die Imprägnierung erfolgte mittels der "incipient wetness"-Methode, wozu bezogen auf 200 g Produktmenge 176 g einer 1,2 molaren $AgNO_3$-Lösung verwendet wurde. Die Trocknung erfolgte bei 120 °C.

Beispiel 6

Ein Zeolithmaterial mit der Struktur CHA und einem $SiO_2/Al_2O_3$-Verhältnis von 0,15 wurde mit Pural ® SB zu einer Masse verknetet, extrudiert und kalziniert. Die Imprägnierung erfolgte mittels der "incipient wetness"-Methode, wozu bezogen auf 200 g Produktmenge 150 g einer 1,4 molaren $AgNO_3$-Lösung verwendet wurde. Die Trocknung erfolgte bei 120 °C.

Beispiel 7

Ein Zeolithmaterial mit der Struktur MOR und einem SiO2/Al2O3-Verhältnis von 40 wurde mit Pural® SB zu einer Masse verknetet, extrudiert und kalziniert.

Beispiel 8

Ein Zeolithmaterial mit der Struktur MOR und einem $SiO_2/Al_2O_3$-Verhältnis von 40 wurde mit Pural® SB zu einer Masse verknetet, extrudiert und kalziniert. Die Imprägnierung erfolgte mittels der "incipient wetness"-Methode, wozu bezogen auf 200 g Produktmenge 150 g einer 1,4 molaren $AgNO_3$-Lösung verwendet wurde. Die Trocknung erfolgte bei 120 °C.

Beispiel 9

Ein Zeolithmaterial mit der Struktur MOR und einem $SiO_2/Al_2O_3$-Verhältnis von 90 wurde mit Pural® SB zu einer Masse verknetet, extrudiert und kalziniert. Die Imprägnierung erfolgte mittels der "incipient wetness"-Methode, wozu bezogen auf 200 g Produktmenge 150 g einer 1,4 molaren $AgNO_3$-Lösung verwendet wurde. Die Trocknung erfolgte bei 120 °C.

Beispiel 10

Ein Zeolithmaterial mit der Struktur MOR und einem $SiO_2/Al_2O_3$-Verhältnis von 90 wurde mit Pural® SB zu einer Masse verknetet, extrudiert und kalziniert. Die Imprägnierung erfolgte mittels der "incipient wetness"-Methode, wozu bezogen auf 100 g Produktmenge 79 g einer 2,2 molaren $AgNO_3$-Lösung verwendet wurde. Die Trocknung erfolgte bei 120 °C.

Beispiel 11

Ein Zeolithmaterial mit der Struktur MOR und einem $SiO_2/Al_2O_3$-Verhältnis von 90 wurde mit Pural ® SB zu einer Masse verknetet, extrudiert und kalziniert. Die Imprägnierung erfolgte mittels der "incipient wetness"-Methode, wozu bezogen auf 100 g Produktmenge 83 g einer 3,1 molaren AgNO$_3$-Lösung verwendet wurde. Die Trocknung erfolgte bei 120 °C.

Beispiel 12

Ein Zeolithmaterial mit der Struktur MOR und einem SiO$_2$/Al$_2$O$_3$-Verhältnis von 40 wurde mit Pural ® SB zu einer Masse verknetet, extrudiert und kalziniert. Die Imprägnierung erfolgte mittels der "incipient wetness"-Methode, wozu bezogen auf 200 g Produktmenge 150 g einer 2,2 molaren AgNO$_3$-Lösung verwendet wurde. Die Trocknung erfolgte bei 120 °C.

Beispiel 13

Wie Beispiel 9, jedoch erfolgte die Trocknung bei 160 °C.

Beispiel 14

Wie Beispiel 9, jedoch erfolgte die Trocknung bei 240 °C.

Beispiel 15

Wie Beispiel 9, jedoch erfolgte die Trocknung bei 400 °C.

**Tabelle 1: Verwendete Proben**

| Beispiel | Bezeichnung | Strukturtyp | Ag-Gehalt [Gew.-%] | SiO$_2$/Al$_2$O$_3$ | Trocknung [°C] |
|---|---|---|---|---|---|
| 1 | Aktivkohle | n.a. | n.a. | n.a. | n.a. |
| 2 | H-BEA-150 | Beta | 0 | 150 | 120 |
| 3 | Ag-MFI-27 | MFI | 11,2 | 27 | 120 |
| 4 | Ag-MFI-1200 | MFI | 8,7 | 1200 | 120 |
| 5 | Ag-ERI | ERI | 1,97 | 3,3 | 120 |
| 6 | Ag-CHA | CHA | 11,1 | 0,15 | 120 |
| 7 | H-MOR-40 | MOR | 0 | 40 | 120 |
| 8 | Ag-MOR-40(12) | MOR | 10,5 | 40 | 120 |
| 9 | Ag-MOR-90(12) | MOR | 11,0 | 90 | 120 |
| 10 | Ag-MOR-90(20) | MOR | 20,5 | 90 | 120 |
| 11 | Ag-MOR-90(30) | MOR | 29,4 | 90 | 120 |
| 12 | Ag-MOR-40(20) | MOR | 10,5 | 40 | 120 |
| 13 | Ag-MOR-90(160°C) | MOR | 11,0 | 90 | 160 |
| 14 | Ag-MOR-90(240°C) | MOR | 11,0 | 90 | 240 |
| 15 | Ag-MOR-90(400°C) | MOR | 11,0 | 90 | 400 |

**Tabelle 2: Adsorptionsexperimente**

| Beispiel | Material | Ag/Al | Kr-Adsorption T$_{Des}$ [°C] | A$_A$ | Xe-Adsorption T$_{Des}$ [°C] | A$_A$ |
|---|---|---|---|---|---|---|
| 1 | Aktivkohle | - | 70 - 120 | 1 | 85 - 100 | 1 |
| 2 | H-BEA-150 | 0 | n.a. | 0 | n.a. | 0 |
| 3 | Ag-MFI-27 | 1,6 | 190 - 260 | 6,96 | 190 - 260 | 1,04 |

(fortgesetzt)

| Beispiel | Material | Ag/Al | Kr-Adsorption | | Xe-Adsorption | |
|---|---|---|---|---|---|---|
| | | | $T_{Des}$ [°C] | $A_A$ | $T_{Des}$ [°C] | $A_A$ |
| 4 | Ag-MFI-1200 | 71 | 170 - 390 | 7,08 | 170 - 390 | 1,14 |
| 5 | Ag-ERI | 0,05 | 370 - 450 | 7,7 | 270 - 400 | 0,01 |
| 6 | Ag-CHA | 0,03 | 190 - 460 | 12,1 | 190 - 460 | 0,22 |
| 7 | H-MOR-40 | n.a. | 200 - 370 | 1,37 | 70 - 80 | 0,98 |
| 8 | Ag-MOR-40(12) | 2,4 | 260 - 280 | 12,99 | 260 - 280 | 1,74 |
| 9 | Ag-MOR-90(12) | 5,3 | 190 - 300 | 9,31 | 190 - 300 | 2,46 |
| 10 | Ag-MOR-90(20) | 10,5 | 190 - 250 | 8,2 | 190 - 300 | 4,01 |
| 11 | Ag-MOR-90(30) | 20,5 | 120 - 470 | 5,1 | 80 - 300 | 1,98 |
| 12 | Ag-MOR-40(20) | 4,7 | 100 - 300 | 12 | 200 - 300 | 3,40 |
| 13 | Ag-MOR-90(160°C) | 5,3 | 240 - 340 | 4,63 | 70 - 340 | 1,37 |
| 14 | Ag-MOR-90(240°C) | 5,3 | 300 - 400 | 4,65 | 70 - 340 | 1,86 |
| 15 | Ag-MOR-90(400°C) | 5,3 | n.a. | 0 | 80 - 120 | 1,84 |

**Patentansprüche**

1. Verwendung eines Adsorptionsmaterials zur gleichzeitigen Adsorption von Xenon und Krypton aus einem Gasgemisch, wobei das Adsorptionsmaterial ein mit Ag beladenes synthetisch hergestelltes Zeolithmaterial, das den Strukturtyp MOR aufweist, umfasst, **dadurch gekennzeichnet, dass** das Ag/Al-Verhältnis im Zeolithmaterial größer 1 ist.

2. Verwendung nach Anspruch 1, **dadurch gekennzeichnet, dass** das Ag/Al-Verhältnis im Zeolithmaterial zwischen 1 und 30 ist.

3. Verwendung nach Anspruch 1, **dadurch gekennzeichnet, dass** das Ag/Al-Verhältnis im Zeolithmaterial zwischen 2 und 20 ist.

4. Verwendung nach einem der vorhergehenden Ansprüche, **dadurch gekennzeichnet, dass** das Zeolithmaterial ein $SiO_2/Al_2O_3$-Verhältnis größer 10 aufweist.

5. Verfahren zur gleichzeitigen Adsorption von Xenon und Krypton bei dem ein Adsorptionsmaterial mit einem Xenon- und Krypton-haltigen Gasgemisch in Kontakt gebracht wird, wobei das Adsorptionsmaterial ein mit Ag beladenes synthetisch hergestelltes Zeolithmaterial, das den Strukturtyp MOR aufweist, umfasst, **dadurch gekennzeichnet, dass** das Ag/Al-Verhältnis im Zeolithmaterial größer 1 ist.

6. Verfahren nach Anspruch 5, **dadurch gekennzeichnet, dass** das Gasgemisch eine Temperatur über 50°C aufweist.

7. Verfahren nach Anspruch 6, **dadurch gekennzeichnet, dass** das Gasgemisch mehr als 10 Vol.-% gasförmiges Wasser enthält.

**Claims**

1. Use of an adsorption material for simultaneous adsorption of xenon and krypton from a gas mixture, wherein the adsorption material comprises an Ag-laden, synthetically produced zeolite material having the MOR structure type, **characterized in that** the Ag/Al ratio in the zeolite material is greater than 1.

**2.** Use according to Claim 1, **characterized in that** the Ag/Al ratio in the zeolite material is between 1 and 30.

**3.** Use according to Claim 1, **characterized in that** the Ag/Al ratio in the zeolite material is between 2 and 20.

**4.** Use according to any of the preceding claims, **characterized in that** the zeolite material has an $SiO_2/Al_2O_3$ ratio greater than 10.

**5.** Process for simultaneous adsorption of xenon and krypton, in which adsorption material is contacted with a xenon- and krypton-containing gas mixture, wherein the adsorption material comprises an Ag-laden, synthetically produced zeolite material having the MOR structure type, **characterized in that** the Ag/Al ratio in the zeolite material is greater than 1.

**6.** Process according to Claim 5, **characterized in that** the temperature of the gas mixture exceeds 50°C.

**7.** Process according to Claim 6, **characterized in that** the gas mixture contains more than 10% by volume of gaseous water.

**Revendications**

**1.** Utilisation d'un matériau d'adsorption pour l'adsorption simultanée de xénon et de krypton à partir d'un mélange de gaz, le matériau d'adsorption comprenant un matériau de zéolithe préparé synthétiquement, chargé par de l'Ag, qui présente le type de structure MOR, **caractérisée en ce que** le rapport Ag/Al dans le matériau de zéolithe est supérieur à 1.

**2.** Utilisation selon la revendication 1, **caractérisée en ce que** le rapport Ag/Al dans le matériau de zéolithe est compris entre 1 et 30.

**3.** Utilisation selon la revendication 1, **caractérisée en ce que** le rapport Ag/Al dans le matériau de zéolithe est compris entre 2 et 20.

**4.** Utilisation selon l'une quelconque des revendications précédentes, **caractérisée en ce que** le matériau de zéolithe présente un rapport $SiO_2/Al_2O_3$ supérieur à 10.

**5.** Procédé pour l'adsorption simultanée de xénon et de krypton dans lequel un matériau d'adsorption est mis en contact avec un mélange de gaz contenant du xénon et du krypton, le matériau d'adsorption comprenant un matériau de zéolithe préparé synthétiquement, chargé par de l'Ag, qui présente le type de structure MOR, **caractérisé en ce que** le rapport Ag/Al dans le matériau de zéolithe est supérieur à 1.

**6.** Procédé selon la revendication 5, **caractérisé en ce que** le mélange de gaz présente une température supérieure à 50 °C.

**7.** Procédé selon la revendication 6, **caractérisé en ce que** le mélange de gaz contient plus de 10 % en volume d'eau sous forme de gaz.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0029875 A1

**In der Beschreibung aufgeführte Nicht-Patentliteratur**

- **DANIEL et al.** Xenon Capture on Silver-Loaded Zeolites: Characterization of Very Strong Adsorption Sides. *J. Phys. Chem.,* 2013, vol. 117 (29), 15122-15129
- **MUNAKATA et al.** Adsorption of Noble Gases on Silver-Mordenite. *Journal of Nuclear Science and Technology,* 2003, vol. 40 (9), 695-697
- **D.S. COOMBS et al.** *Canadian Mineralogist,* 1979, vol. 35, 1571
- Verified Syntheses of Zeolitic Materials. **KARL PETTER LILLERUD.** Synthesis Commission of the International Zeolite Association. 2001
- *J. Am. Chem. Soc.,* 1938, vol. 60, 309